# FASCICULE DE BREVET EUROPEEN

(11) **EP 1 358 746 B1**
(45) Date de publication et mention de la délivrance du brevet: **18.07.2007**
(21) Numéro de dépôt: 01965332.8
(22) Date de dépôt: 17.08.2001
(51) Int. Cl.: H04L 29/06, H04L 12/18

(54) **SYSTEME D'ACCES A UN ENVIRONNEMENT DE TRAVAIL COOPERATIF**
ZUGANGSSYSTEM ZU EINES ZUSSAMENARBEITSUMGEBUNG
ACCESS SYSTEM TO AT LEAST A CO-OPERATIVE WORK ENVIRONMENT

(30) Priorité: 22.08.2000 FR 0010810
(43) Date de publication de la demande: 05.11.2003
(73) Titulaire: FRANCE TELECOM, 75015 Paris (FR)
(72) Inventeur: REITER, Pascal, F-54600 Villers les Nancy (FR); THIEL, Chantal, F-54180 Heillecourt (FR); DIDELOT, Gilles, F-54520 Laxou (FR)
(74) Mandataire: Habasque, Etienne J. Jean-François
(86) Numéro de dépôt international: PCT/FR2001/002627
(87) Numéro de publication internationale: WO 2002/017562

(56) Documents cités:
- EP-A- 0 891 063
- WO-A-99/08419
- WO-A-99/26153
- US-A- 5 553 239
- US-A- 5 583 993
- US-A- 6 020 884

## Description

La présente invention concerne un système d'accès à au moins un environnement de travail coopératif accessible par au moins un terminal muni d'un logiciel de travail coopératif, à travers un réseau de transmission d'informations, comportant au moins un serveur de conférences adapté pour héberger l'environnement de travail coopératif.

Un environnement de travail coopératif est une zone de mémoire réservée sur l'un des serveurs de conférences 10, 12 et accessible en lecture et en écriture par un nombre limité d'utilisateurs.

On connaît de tels systèmes d'accès. Aujourd'hui, un système d'accès à au moins un environnement de travail coopératif comporte un serveur de conférences compatible avec la norme internationale T120 et accessible par un réseau de transmission d'informations supportant le protocole de communication IP (Internet Protocole) et dénommé, dans la suite, réseau IP.

Un utilisateur, souhaitant accéder à un environnement de travail coopératif à partir d'un terminal muni d'un logiciel de travail coopératif selon la norme T120, active ce dernier et doit également se connecter au serveur de conférences hébergeant l'environnement de travail coopératif considéré.

Un tel système exige de la part de l'utilisateur, la connaissance de l'adresse universelle du serveur de conférences, voire même de l'environnement de travail coopératif, sur le réseau IP. De plus, la complexité d'un tel système d'accès est un frein à son utilisation par des utilisateurs non familiers avec les technologies de l'information.

D'autres états de la technique concernant des systèmes pour établir une session de communications multiples sont divulgués dans EP-A-0 891 063 et WO 99/26153 A.

L'invention vise à remédier aux inconvénients des systèmes d'accès classiques en créant un système d'accès simple d'utilisation.

L'invention a donc pour objet un système d'accès conforme à la revendication 1.

Un système d'accès selon l'invention permet de la sorte à un utilisateur d'accéder à un environnement de travail coopératif par l'intermédiaire d'une interface simple, le système prenant en charge automatiquement, sans nécessiter d'intervention de la part de l'utilisateur, le lancement du logiciel de travail coopératif, la connexion au serveur de conférences et le suivi de l'accès à l'environnement de travail coopératif.

Un système d'accès à au moins un environnement de travail coopératif selon l'invention peut en outre comporter une ou plusieurs des caractéristiques qui apparaissent dans les revendications dépendantes.

L'invention sera mieux comprise à l'aide de la description qui va suivre, donnée uniquement à titre d'exemple et faite en se référant aux dessins annexés sur lesquels :
- la figure 1 illustre schématiquement la structure d'un système d'accès selon l'invention ; et
- la figure 2 est un organigramme détaillant le fonctionnement du système d'accès représenté à la figure 1.

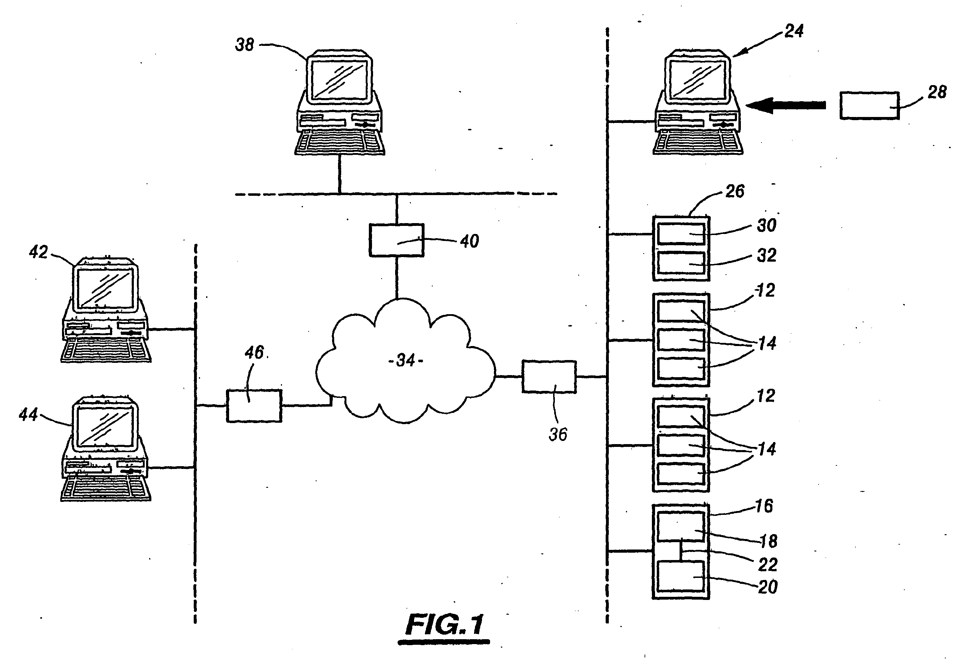

Un système d'accès représenté à la figure 1 comporte plusieurs serveurs de conférences 10, 12, hébergeant chacun une pluralité d'environnements de travail coopératif 14.

Le système comporte également un serveur d'accès 16, se présentant classiquement sous la forme d'un serveur Web, comprenant une interface 18 d'échange d'informations se présentant classiquement sous la forme d'un ensemble de pages de présentation selon le format HTML (HyperText Mark-up Language). Le serveur d'accès 16 comprend en outre un logiciel d'accès 20 adapté pour exécuter automatiquement le lancement d'un logiciel de travail coopératif et la gestion de la connexion d'un terminal à l'un des serveurs de conférences 10, 12 hébergeant un environnement de travail coopératif 14 requis. Un lien hypertexte 22 est établi sur le serveur d'accès 16 au travers de l'interface 18 vers le logiciel d'accès 20, pour permettre le téléchargement à distance du logiciel d'accès 20.

Un serveur 26 de gestion du suivi de l'accès aux environnements de travail coopératif 14 connecté en réseau local avec les serveurs de conférences 10, 12 et le serveur d'accès 16, comprend des moyens 30 d'affectation des environnements de travail coopératif 14 dans les différents serveurs de conférences 10, 12 en fonction de la disponibilité de ceux-ci et des moyens 32 d'allocation dynamique de mémoire pour un environnement de travail coopératif 14 en fonction de l'évolution de celui-ci dans le temps.

De même, un terminal opérateur 24 est connecté en réseau local avec les serveurs de conférences 10, 12, le serveur d'accès 16 et le serveur 26 de gestion du suivi de l'accès, pour la consultation de ceux-ci. Il comporte en outre un logiciel de facturation 28 de type classique.

Les serveurs de conférences 10, 12 ainsi que le serveur d'accès 16 sont connectés à un réseau 34 de transmission d'informations de type réseau IP, au moyen d'un routeur 36 classique.

Des terminaux clients distants sont également connectés au réseau de transmission d'informations 34. Parmi ceux-ci un premier terminal client 38 est par exemple situé sur un premier site distant et est connecté au réseau 34 au moyen d'un routeur 40. Deux autres terminaux clients 42 et 44 sont par exemple situés sur un deuxième site distant et sont connectés au réseau 34 au moyen d'un routeur 46. Chacun de ces terminaux 38, 42 et 44 est muni d'un logiciel de travail coopératif conforme à la norme internationale T120 (non représenté), ainsi que d'un logiciel (non représenté) de navigation sur le réseau 34 lui -permettant d'accéder à l'interface 18 d'échange d'informations du serveur d'accès 16.

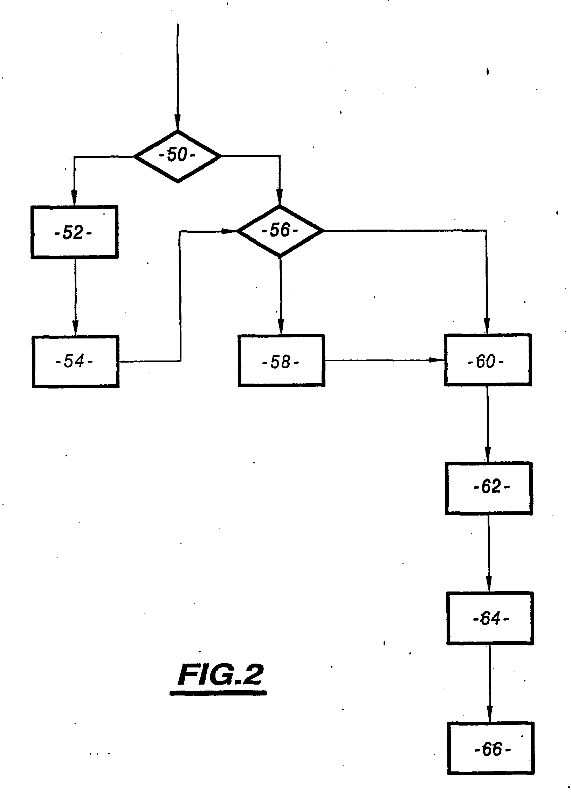

Le fonctionnement du système décrit précédemment, pour un utilisateur d'un des terminaux clients 38, 42 ou 44, est représenté schématiquement à la figure 2.

Un premier utilisateur du système accédant au réseau 34 à partir du terminal 38 souhaite, par exemple, travailler en commun avec deux autres utilisateurs, accédant au réseau 34 à partir des terminaux 42 et 44 respectivement.

Pour ce faire, il se connecte à l'interface 18 d'échange d'informations du serveur d'accès 16, en entrant l'adresse universelle correspondante sur son logiciel de navigation.

Lors d'une première étape 50 d'accueil, l'interface 18 d'échange d'informations lui propose de choisir entre la création d'un nouvel environnement de travail coopératif 14 ou la participation à un environnement de travail coopératif déjà créé.

En tant qu'organisateur de la session de travail en commun, le premier utilisateur opte pour la création d'un nouvel environnement de travail coopératif 14 et passe à une étape 52 d'enregistrement.

Lors de cette étape 52, l'interface 18 d'échange d'informations lui propose d'enregistrer des données d'identification du nouvel environnement de travail coopératif 14. Le premier utilisateur choisit ces données d'identification pour identifier son environnement de travail coopératif 14 et les associe à un mot de passe. Après confirmation de ces données, on passe à une étape 54 de création.

Lors de cette étape 54, le serveur d'accès 16 transmet les informations précédemment obtenues lors de l'étape 52 aux moyens 30 d'affectation des environnements de travail coopératif 14. En fonction de la disponibilité des différents serveurs de conférences 10, 12 du système, les moyens 30 d'affectation choisissent le serveur de conférences devant héberger le nouvel environnement de travail coopératif 14.

Suite à cette étape, le premier utilisateur peut choisir de participer à un environnement de travail coopératif 14 et notamment à celui qu'il vient de créer, lors d'une étape 56 d'inscription.

De même, les utilisateurs des terminaux 42 et 44, souhaitant simplement participer à l'environnement de travail coopératif 14 créé par l'organisateur, passent directement à l'étape 56 d'inscription après avoir choisi l'option de participation à un environnement de travail coopératif 14, lors de l'étape 50.

Dans la suite de la description du fonctionnement, on entend par « utilisateur » l'un quelconque parmi les utilisateurs des terminaux 38, 42 ou 44.

Lors de l'étape 56 d'inscription, l'interface 18 d'échange d'informations rappelle à l'utilisateur que s'il participe pour la première fois à un environnement de travail coopératif 14 du système, il doit installer le logiciel d'accès 20 sur son terminal client. Puis, on passe à une étape 58 de téléchargement si nécessaire. Sinon on passe à une étape 60 de choix.

Lors de l'étape 58 de téléchargement, l'utilisateur accède, grâce au lien hypertexte 22, au logiciel d'accès 20 et le télécharge, de façon classique, sur son terminal. On passe alors à l'étape 60 de choix.

Lors de cette étape 60, l'interface 18 d'échange d'informations propose à l'utilisateur une liste d'environnements de travail coopératifs déjà créés, parmi lesquels se trouve l'environnement de travail coopératif 14 précédemment créé par le premier utilisateur lors de l'étape 54.

Après avoir choisi l'environnement de travail coopératif 14 précédemment créé, l'utilisateur passe à une étape d'enregistrement 62, lors de laquelle il confirme son choix par la saisie du mot de passe associé au nom de l'environnement de travail coopératif 14. L'organisateur de cette session de travail coopératif aura bien sûr au préalable informé de ce mot de passe les deux autres utilisateurs, autorisés à participer à cette session.

Après validation des données saisies par l'utilisateur, on passe à une étape 64 d'accès à l'environnement de travail coopératif 14. Lors de cette étape, le logiciel d'accès 20 commande, sans intervention de l'utilisateur, le lancement du logiciel de travail coopératif installé sur le terminal 38, 42 ou 44, ainsi que la connexion au serveur de conférences 10 ou 12 hébergeant l'environnement de travail coopératif 14 choisi. Simultanément, le logiciel de facturation 28 est sollicité pour facturer, de façon classique, le temps de participation de l'utilisateur à l'environnement de travail coopératif 14. Les moyens 32 d'allocation de mémoire sont également sollicités pour réserver une zone de mémoire suffisante sur le serveur de conférences hébergeant l'environnement de travail coopératif 14 choisi, en fonction du nombre d'utilisateurs participant à cet environnement de travail coopératif, à chaque instant.

Lors d'une dernière étape 66 de fin de participation, le serveur 26 de gestion du suivi de l'accès reçoit un signal de fin de participation de l'utilisateur de la part de l'environnement de travail coopératif 14. Ce signal est transmis aux autres participants, par l'intermédiaire de l'environnement de travail coopératif 14, sous la forme d'un signal sonore de fin de participation.

Lorsque tous les participants ont quitté l'environnement de travail coopératif 14, celui-ci devient inactif au-delà d'une durée prédéterminée de, par exemple, 15 minutes. Les moyens 30 d'affectation libèrent alors la zone de mémoire affectée à cet environnement de travail coopératif 14 sur le serveur de conférences 10 ou 12 correspondant et effacent le nom de l'environnement de travail coopératif 14 de la liste proposée à l'étape 60 par l'interface 18 d'échange d'informations.

Il apparaît clairement qu'un système selon l'invention permet de faciliter l'accès à un environnement de travail coopératif pour un utilisateur, organisant ou participant à un environnement de travail coopératif 14, en mettant à sa disposition une interface 18 d'échange d'informations simple associée à un logiciel d'accès 20 téléchargeable sur le terminal de l'utilisateur, ce logiciel d'accès 20 se chargeant automatiquement, sans intervention de la part de l'utilisateur, du lancement du logiciel de travail coopératif installé sur le terminal de l'utilisateur et de la connexion au serveur de conférences 10, 12 hébergeant l'environnement de travail coopératif 14 choisi par l'utilisateur.

## Revendications

1. Système d'accès à au moins un environnement de travail coopératif (14) formé d'une zone de mémoire sur un serveur de conférence accessible en lecture et en écriture par au moins un terminal (38, 42, 44) muni d'un logiciel de travail coopératif, à travers un réseau (34) de transmission d'informations, comportant au moins un serveur de conférences (10, 12) adapté pour héberger la zone de mémoire de l'environnement de travail coopératif (14), **caractérisé en ce qu'**il comporte :
- d'une part des moyens (18, 20) de gestion de l'accès à la zone de mémoire de l'environnement de travail coopératif (14) comportant :
a) une première partie (18) formant interface d'échange d'informations avec un utilisateur du terminal (38, 42, 44) pour l'accès à la zone de mémoire de l'environnement de travail coopératif (14) propre à permettre à un utilisateur de choisir entre la création d'une nouvelle zone de mémoire pour former un nouvel environnement de travail coopératif ou l'accès en lecture et en écriture à une zone de mémoire d'un environnement de travail coopératif déjà crée, et
b) une seconde partie (20) adaptée pour assurer automatiquement à la fois le lancement du logiciel de travail coopératif et la gestion de la connexion au serveur de conférences en fonction des informations issues de la première partie (18), et
- d'autre part des moyens (24, 26) de gestion du suivi de l'accès à l'environnement de travail coopératif.

2. Système d'accès à au moins un environnement de travail coopératif (14) selon la revendication 1, **caractérisé en ce qu'**il comprend un serveur d'accès (16) connecté au réseau (34) de transmission d'informations, comportant les moyens (18, 20) de gestion d'accès et des moyens (22) de mise à disposition de la seconde partie (20) des moyens de gestion d'accès par téléchargement sur ledit terminal (38, 42, 44).

3. Système d'accès à au moins un environnement de travail coopératif (14) selon la revendication 1 ou 2, **caractérisé en ce que** le logiciel de travail coopératif et le serveur de conférences sont conformes à la norme internationale T120.

4. Système d'accès à au moins un environnement de travail coopératif (14) selon l'une des revendications 1 à 3, **caractérisé en ce que** les informations issues de la première partie (18) comportent des données d'identification de l'environnement de travail coopératif (14) associées à un mot de passe.

5. Système d'accès à au moins un environnement de travail coopératif (14) selon l'une des revendications 1 à 4, **caractérisé en ce que** les moyens (18, 20) de gestion de l'accès à l'environnement de travail coopératif (14) comportent des moyens de commande pour la création de l'environnement de travail coopératif dans le serveur de conférences (10, 12), en fonction des informations issues de la première partie.

6. Système d'accès à au moins un environnement de travail coopératif (14) selon l'une des revendications 1 à 5, **caractérisé en ce que** les moyens (24, 26) de gestion du suivi de l'accès comportent des moyens (32) de dimensionnement dynamique de l'environnement de travail coopératif (14) dans le serveur de conférences (10, 12) en fonction du nombre d'utilisateurs de cet environnement de travail coopératif.

7. Système d'accès à au moins un environnement de travail coopératif (14) selon l'une des revendications 1 à 6, **caractérisé en ce que** les moyens (24, 26) de gestion du suivi de l'accès comportent des moyens de suppression automatique de l'environnement de travail coopératif (14) dans le serveur de conférences (10, 12), en cas d'inactivité de cet environnement au-delà d'une durée prédéterminée.

8. Système d'accès à au moins un environnement de travail coopératif (14) selon l'une des revendications 1 à 7, **caractérisé en ce que** les moyens (24, 26) de gestion du suivi de l'accès comportent des moyens (28) de facturation des connexions établies entre le terminal (38, 42, 44) et le serveur de conférences (10, 12).

9. Système d'accès à au moins un environnement de travail coopératif (14) selon l'une des revendications 1 à 8, **caractérisé en ce qu'**il comporte une pluralité de serveurs de conférences (10, 12) et **en ce que** les moyens (24, 26) de gestion du suivi de l'accès comportent des moyens (30) d'affectation de l'environnement de travail coopératif (14) à l'un quelconque des serveurs de conférences en fonction de sa disponibilité.

## Claims

1. System for access to at least one cooperative work environment (14) formed by a memory area on a conference server which is read- and write-accessible by at least one terminal (38,42,44) provided with cooperative work software, across an information transmission network (34), comprising at least one conference server (10,12) suitable for hosting the memory area of the cooperative work environment (14), **characterized in that** it comprises:
- on the one hand, means (18,20) for managing access to the memory area of the cooperative work environment (14) comprising:
a) a first part (18) forming an interface for exchanging information with a user of the terminal (38,42,44) for access to the memory area of the cooperative work environment (14) designed to enable a user to choose between the creation of a new memory area so as to form a new cooperative work environment or read- and write-access to a memory area of an already created cooperative work environment, and
b) a second part (20) suitable for automatically running the cooperative work software and at the same time managing the connection to the conference server on the basis of the information arising from the first part (18), and
- on the other hand, means (24,26) for managing tracking of access to the cooperative work environment.

2. System for access to at least one cooperative work environment (14) according to Claim 1, **characterized in that** it comprises an access server (16) connected to the information transmission network (34), comprising the access management means (18,20) and means (22) for making the second part (20) of the access management means available by downloading onto the said terminal (38,42,44).

3. System for access to at least one cooperative work environment (14) according to Claim 1 or 2, **characterized in that** the cooperative work software and the conference server comply with international standard T120.

4. System for access to at least one cooperative work environment (14) according to one of Claims 1 to 3, **characterized in that** the information arising from the first part (18) comprises identification data, associated with a password, for identifying the cooperative work environment (14).

5. System for access to at least one cooperative work environment (14) according to one of Claims 1 to 4, **characterized in that** the means (18,20) for managing access to the cooperative work environment (14) comprise control means for creating the cooperative work environment in the conference server (10, 12), on the basis of the information arising from the first part.

6. System for access to at least one cooperative work environment (14) according to one of Claims 1 to 5, **characterized in that** the access tracking management means (24,26) comprise means (32) for dynamically dimensioning the cooperative work environment (14) in the conference server (10,12) on the basis of the number of users of this cooperative work environment.

7. System for access to at least one cooperative work environment (14) according to one of Claims 1 to 6, **characterized in that** the access tracking management means (24,26) comprise means for automatically removing the cooperative work environment (14) from the conference server (10,12), should this environment be inactive beyond a predetermined duration.

8. System for access to at least one cooperative work environment (14) according to one of Claims 1 to 7, **characterized in that** the access tracking management means (24,26) comprise means (28) for billing the connections established between the terminal (38,42,44) and the conference server (10,12).

9. System for access to at least one cooperative work environment (14) according to one of Claims 1 to 8, **characterized in that** it comprises a plurality of conference servers (10,12) and **in that** the access tracking management means (24,26) comprise means (30) for assigning the cooperative work environment (14) to any one of the conference servers on the basis of its availability.

## Patentansprüche

1. Zugriffssystem zu mindestens einem Zusammenarbeitsumfeld (14), das von einer Speicherzone auf einem Konferenzserver gebildet ist, der im Lese- und Schreibmodus über mindestens ein Terminal (38, 42, 44), das mit einer Zusammenarbeitssoftware versehen ist, über ein Informationsübertragungsnetz (34) zugänglich ist, das mindestens einen Konferenzserver (10, 12) umfasst, der für die Aufnahme der Speicherzone des Zusammenarbeitsumfeldes (14) angepasst ist, **dadurch gekennzeichnet, dass** es umfasst:
- einerseits Mittel (18, 20) zur Verwaltung des Zugriffs auf eine Speicherzone des Zusammenarbeitsumfeldes (14), umfassend:
a) einen ersten Teil (18), der eine Informationsaustauschschnittstelle mit einem Benutzer des Terminals (38, 42, 44) für den Zugriff auf die Speicherzone des Zusammenarbeitsumfeldes (14) bildet, die es einem Benutzer ermöglichen kann, zwischen der Erzeugung einer neuen Speicherzone zur Bildung eines neuen Zusammenarbeitsumfeldes oder dem Lese- und Schreibzugriff auf eine Speicherzone eines bereits erzeugten Zusammenarbeitsumfeldes zu wählen, und
b) einen zweiten Teil (20), der dazu ausgeführt ist, automatisch zugleich die Einrichtung der Zusammenarbeitssoftware als auch die Verwaltung des Anschlusses an den Konferenzserver in Abhängigkeit von den vom ersten Teil (18) kommenden Informationen zu gewährleisten, und
- andererseits Mittel (24, 26) zur Verwaltung der Zugriffsverlauf auf das Zusammenarbeitsumfeld.

2. Zugriffssystem zu mindestens einem Zusammenarbeitsumfeld (14) nach Anspruch 1, **dadurch gekennzeichnet, dass** es einen Zugriffsserver (16) umfasst, der an das Informationsübertragungsnetz (34) angeschlossen ist, umfassend die Mittel (18, 20) zur Zugriffsverwaltung und Mittel (22) zur Bereitstellung der Zugriffsverwaltungsmittel für den zweiten Teil (20) durch Fernladen auf das Terminal (38, 42, 44).

3. Zugriffssystem zu mindestens einem Zusammenarbeitsumfeld (14) nach Anspruch 1 oder 2, **dadurch gekennzeichnet, dass** die Zusammenarbeitssoftware und der Konferenzserver der internationalen Norm T120 entsprechen.

4. Zugriffssystem zu mindestens einem Zusammenarbeitsumfeld (14) nach einem der Ansprüche 1 bis 3, **dadurch gekennzeichnet, dass** die vom ersten Teil (18) kommenden Informationen Daten zur Identifikation des Zusammenarbeitsumfeldes (14) umfassen, die einem Passwort zugeordnet sind.

5. Zugriffssystem zu mindestens einem Zusammenarbeitsumfeld (14) nach einem der Ansprüche 1 bis 4, **dadurch gekennzeichnet, dass** die Mittel (18, 20) zur Verwaltung des Zugriffes auf das Zusammenarbeitsumfeld (14) Steuermittel für die Erzeugung des Zusammenarbeitsumfeldes im Konferenzserver (10, 12) in Abhängigkeit von vom ersten Teil kommenden Informationen umfassen.

6. Zugriffssystem zu mindestens einem Zusammenarbeitsumfeld (14) nach einem der Ansprüche 1 bis 5, **dadurch gekennzeichnet, dass** die Mittel (24, 26) zur Verwaltung der Verlauf des Zugriffs Mittel (32) zur dynamischen Dimensionierung des Zusammenarbeitsumfeldes (14) im Konferenzserver (10, 12) in Abhängigkeit von der Anzahl von Benutzern dieses Zusammenarbeitsumfeldes umfassen.

7. Zugriffssystem zu mindestens einem Zusammenarbeitsumfeld (14) nach einem der Ansprüche 1 bis 6, **dadurch gekennzeichnet, dass** die Mittel (24, 26) zur Verwaltung der Zugriffsverlauf Mittel zur automatischen Unterdrückung des Zusammenarbeitsumfeldes (14) im Konferenzserver (10, 12) im Falle einer Inaktivität dieses Umfeldes über eine vorbestimmte Dauer hinaus umfassen.

8. Zugriffssystem auf mindestens ein Zusammenarbeitsumfeld (14) nach einem der Ansprüche 1 bis 7, **dadurch gekennzeichnet, dass** die Mittel (24, 26) zur Steuerung der Verlauf des Zugriffs Mittel (28) zur Berechnung der Anschlüsse, die zwischen dem Terminal (38, 42, 44) und dem Konferenzserver (10, 12) hergestellt sind, umfassen.

9. Zugriffssystem zu mindestens einem Zusammenarbeitsumfeld (14) nach einem der Ansprüche 1 bis 8, **dadurch gekennzeichnet, dass** es eine Vielzahl von Konferenzservern (10, 12) umfasst, und dass die Mittel (24, 26) zur Verwaltung der Zugriffsverlauf Mittel (30) zur Zuteilung des Zusammenarbeitsumfeldes (14) an einen der Konferenzserver in Abhängigkeit von seiner Verfügbarkeit umfassen.
